(19) Europäisches Patentamt / European Patent Office / Office européen des brevets

(11) **EP 3 976 303 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **20746109.6**

(22) Anmeldetag: **08.06.2020**

(51) Internationale Patentklassifikation (IPC):
**B23F 21/12** *(2006.01)* **B23F 15/00** *(2006.01)*
**B23F 21/00** *(2006.01)* **B23F 7/00** *(2006.01)*
**B23C 5/04** *(2006.01)*

(52) Gemeinsame Patentklassifikation (CPC):
**B23F 21/12; B23C 5/04; B23F 7/00; B23F 15/00;
B23F 21/005;** B23C 2210/0492; B23C 2210/287

(86) Internationale Anmeldenummer:
**PCT/EP2020/065763**

(87) Internationale Veröffentlichungsnummer:
**WO 2020/259988 (30.12.2020 Gazette 2020/53)**

(54) **ZAHNRADFRÄSER UND VERFAHREN ZUR HERSTELLUNG EINES DOPPELSCHRÄGVERZAHNTEN ZAHNRADS, SOWIE VERWENDUNG DES ZAHNRADFÄSERS ZUR FERTIGUNG DES DOPPELSCHRÄGVERZAHNTEN ZAHNRADS**

GEAR CUTTER, METHOD FOR PRODUCING A DOUBLE HELICAL GEAR, AND USE OF THE GEAR CUTTER FOR PRODUCING THE DOUBLE HELICAL GEAR

FRAISE À TAILLER DES ENGRENAGES ET PROCÉDÉ POUR FABRIQUER UN ENGRENAGE À DOUBLE DENTURE HÉLICOÏDALE, AINSI QU'UTILISATION DE LA FRAISE À TAILLER DES ENGRENAGES POUR PRODUIRE L'ENGRENAGE À DOUBLE DENTURE HÉLICOÏDALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2019 DE 102019004460**

(43) Veröffentlichungstag der Anmeldung:
**06.04.2022 Patentblatt 2022/14**

(73) Patentinhaber: **Aerospace Transmission Technologies GmbH
88046 Friedrichshafen (DE)**

(72) Erfinder: **TSCHARNTKE, Benjamin
88046 Friedrichshafen (DE)**

(74) Vertreter: **Zöschinger, Christian
Dachsstraße 10
88255 Baindt (DE)**

(56) Entgegenhaltungen:
CN-A- 106 583 855    DE-A1- 102016 214 701
DE-U1- 202019 001 722    JP-A- S53 122 993
US-A- 1 490 457    US-A- 1 618 429

**Beschreibung**

Die Erfindung betrifft einen Zahnradfräser gemäß dem Oberbegriff des Anspruchs 1, der aus dem Dokument DE 20 2019 001 722 U1 bekannt ist, sowie ein dazugehöriges Herstellungsverfahren für doppelschrägverzahnte Zahnräder.

Die WO 2009/112003 A1 offenbart ein Verfahren zur Einstellung der Zahnflankenposition eines Zahnrads, das mit einer zweifach schrägverzahnten Ritzelwelle kraftschlüssig verbunden wird. Zwischen Zahnrad und Ritzelwelle wird ein hydraulischer Pressverband ausgebildet, um eine kraftschlüssige Verbindung des auf die Ritzelwelle aufgeschrumpften Zahnrads und durch Aufschrumpfen des Zahnrads zur Einstellung der Zahnradposition aufheben zu können. Die Einstellung erfolgt über die Bestimmung eines Zahnflanken-Apexpunktes der Doppelschrägverzahnung der Ritzelwelle. Es wird eine Radialebene in einem vorgegebenen Axialversatz zum Zahnflanken-Apexpunkt definiert sowie ein Radialversatz in Bezug auf den Zahnflanken-Apexpunkt. Der Schnittpunkt einer Zahnflanke des Zahnrads muß in dem vorgegebenen Radialversatz in der Radialebene liegen. Eine solche Ritzelwelle kommt insbesondere in einem leistungsverzweigten Stirnradgetriebe zum Einsatz, bei welchem eine Antriebswelle über eine Doppelschrägverzahnung mit mehreren Ritzelwellen in Mehrfacheingriff steht, wobei die Zahnräder der Ritzelwellen wiederum mit einer gemeinsamen Abtriebswelle in Mehrfacheingriff stehen. Vorliegend werden Ritzelwellen als Zahnradkränze bezeichnet.

Bei Zahnrädern, bei denen die Zahnradkränze einstückig mit dem Zahnrad verbunden sind, ist ein Verdrehen des einen Zahnradkranzes zu dem anderen wie in der WO 2009/112003 A1 beschrieben nicht möglich. Die Ausrichtung der Zahnradkränze zueinander muß beim Erstellen der Zahnradkränze direkt geschehen, mit möglichst geringen Fertigungstoleranzen. Es ist denkbar, doppelschrägverzahnte Zahnräder mit einer Mehrachsenbearbeitungsmaschine zu fertigen. Bei dieser kann die Helixlücke sogar entfallen. Das Verfahren ist jedoch aufwendig und somit kostenintensiv.

Aus der US 1 618 429 A kennt man bereits einen Wälzfräser mit einer Reihe von Schneidzähnen, die so angeordnet sind, dass sie einer Spirale entsprechen, und der mit seitlichen Schneidkanten versehen ist, wobei jede Schneidkante von Ende zu Ende gerade und im Wesentlichen senkrecht zur Drehachse des Wälzfräsers ist.

Die CN 106 583 855 A befasst sich mit der Herstellung von schrägverzahnten Zahnrädern und offenbart eine Vorrichtung hierzu, die zwei voneinander getrennte Wälzfräseinheiten aufweist.

Die DE 10 2016 214 701 A1 offenbart einen Wälzfräser, insbesondere Stollen-Wälzfräser, zum Herstellen einer Verzahnung, mit einem walzen- oder trommelartigen Grundkörper und vom Grundkörper getragenen, über den Umfang hinweg axial und äquidistant zueinander verlaufenden Stollen mit quer oder schräg zur Längsachse des Grundkörpers ausgerichteten Schneidzähnen, wobei der Grundkörper aus Metall, vorzugsweise aus Edelstahl, und die Stollen aus Hartmetall gefertigt sind und wobei die Stollen mit dem Grundkörper materialschlüssig verbunden, insbesondere verlötet sind.

Die DE 20 2019 001 722 U1 lehrt eine Anfasanordnung zum schneidenden Anfasen von Werkstückverzahnungen, mit wenigstens vier jeweils eine Drehachse aufweisenden Anfaswerkzeugen mit unterschiedlichen Außendurchmessern.

Die JP S53 122993 A beschreibt einen Wälzfräser, der in der Lage ist, das Verzahnen und Anfasen einer Zahnradendfläche in einem Verzahnungszyklus durchzuführen.

Eine Aufgabe der vorliegenden Erfindung ist es dementsprechend, Fertigungstoleranzen gering zu halten. Eine weitere Aufgabe besteht darin, Zeit und Kosten für die Herstellung doppelschrägverzahnter Zahnräder einzusparen.

Vorgesehen ist demgemäß ein Zahnradfräser gemäß Anspruch 1 zum Fräsen eines Zahnrads, wobei das Zahnrad einen ersten schrägverzahnten Zahnradkranz und einen zweiten schrägverzahnten Zahnradkranz aufweist, wobei der Zahnradfräser auf einer um eine Achse rotierbar gelagerte Fräserwelle einen ersten Wälzfräser zum Ausfräsen des ersten Zahnradkranzes und einen zweiten Wälzfräser zum Ausfräsen des zweiten Zahnradkranzes aufweist.

Dadurch, dass zwei Wälzfräser auf einer Fräserwelle vorgesehen sind, kann nunmehr mit einem Zahnradfräser an einem Zahnrad gearbeitet werden. Somit können mit einem einzigen Werkzeug beide Schrägverzahnungen gefertigt werden. Würde man den ersten Wälzfräser auch für den zweiten Zahnradkranz nehmen, so wäre ein Einstellwinkel zwischen einer Achse der Fräswelle relativ zu einer Radialebene, die orthogonal zu einer Rotationsachse des Zahnrads liegt, so groß, dass wiederum eine breite Helix Lücke erforderlich wäre.

Ein Umspannen des Zahnradfräsers in der Fräsmaschine ist nicht erforderlich. Dadurch werden Zeit und Kosten für das Umspannen des Zahnradfräsers eingespart. Weiterhin werden Fertigungstoleranzen, die durch Unterschiede zwischen zwei unterschiedlichen Zahnradfräsern bestehen, vollständig vermieden. Weiterhin ist bei Beginn der Fertigung des zweiten Zahnradkranzes mit dem zweiten Zahnradfräser eine Winkellage des Zahnradfräsers in der Fräsmaschine hinterlegt. Die Winkellage ist wichtig, um bei der Fertigung des zweiten Zahnradkranzes einen Winkel eines Eingriffst festzulegen. Müßte man erst einen zweiten Wälzfräser einspannen, ginge die Winkellage verloren bzw. man müßte sie neu einlesen in eine Steuereinrichtung der Fräsmaschine.

Die Fräserwelle und der erste Wälzfräser und der zweite Wälzfräser sind einstückig ausgebildet und die jeweiligen Außendurchmesser der Wälzfräser sind identisch.

Dies kann auch so aufgefasst und formuliert werden, dass die Fräserwelle und der erste Wälzfräser und der zweite Wälzfräser aus einem Werkstück gefertigt sind.

Die Wälzfräser weisen in einer Helixform um die Fräserwelle angeordnete Stollen auf, wobei die Helixform des ersten Wälzfräsers gegenläufig zu der Helixform des zweiten Wälzfräsers ausgestaltet ist.

Vorteilhafterweise kann ermöglicht werden, den Fußkreisdurchmesser der zwei Wälzfräser auf den Durchmesser der Fräserwelle zu reduzieren. Es kann zudem eine wesentlich bessere Steifigkeit gewährt werden, um eine Verzahnung mit einem Modul größer als 4 fertigen zu können.

Somit kann der nötige Platz in der Welle und der beiden Fräser für eine Nut, um beide beispielsweise mit einem Nutenstein zu verbinden, entfallen.

Ebenso kann auch der nötige Platz bei einer kraftschlüssigen Verbindung, da auch bei einer Kraftschlüssigen Verbindung genügend Material vorhanden sein muss, um den entstehenden Kräften und Momenten standhalten zu können entfallen.

In einer überdies bevorzugten Weiterbildung der Erfindung kann vorgesehen sein, dass ein Verhältnis des Außendurchmessers des ersten Wälzfräsers oder des zweiten Wälzfräsers zum Durchmesser der Fräserwelle zwischen 1,9 und 2,8, bevorzugt zwischen 2,2 und 2,5 beträgt.

Möglich kann beispielsweise sein, dass die Fräserwelle einen Durchmesser zwischen 22 mm und 27 mm aufweist. Möglich kann beispielsweise sein, der die Wälzfräser jeweils einen Außendurchmesser aufweisen, der zwischen 55 und 70 mm liegt.

Ganz besonders bevorzugt beträgt ein Verhältnis der jeweiligen Außendurchmesser der Wälzfräser zum Durchmesser der Fräserwelle 2,4. Hierdurch kann auf einfache Art und Weise ein Zahnrad mit geringer Helix Lücke mit herstellbar sein.

In einer Ausgestaltung weist eine Achse der Fräserwelle relativ zu einer Radialebene, die orthogonal zu einer Rotationsachse des Zahnradkranzes liegt, einen Einstellwinkel von weniger als 20° auf, wenn einer der Wälzfräser in Eingriff mit der jeweiligen Zahnradkranz befindlich ist.

Es wird zur Verdeutlichung des oben genannten auf die Ausführungsbeispiele verwiesen. Bei einem Einstellwinkel von weniger 20° kann eine Helixlücke zwischen den Zahnradkränzen klein ausfallen. Die Helixlücke ist bei rotatorisch gefrästen doppelschrägverzahnten Zahnrädern notwendig, damit der Zahnradfräser beim Fräsen des ersten Zahnradkranzes nicht den zweiten Zahnradkranz berührt. Die Helixlücke kann bei kleinen Einstellwinkeln entsprechend kleiner ausfallen.

Möglich kann auch sein, dass eine Achse der Fräserwelle relativ zu einer Radialebene, die orthogonal zu einer Rotationsachse des Zahnradkranzes liegt, einen Einstellwinkel von weniger als 15° aufweist, wenn einer der Wälzfräser in Eingriff mit der jeweiligen Zahnradkranz befindlich ist.

Hierdurch kann die Helix Lücke entsprechend kleiner ausfallen.

In einer Ausgestaltung liegt ein Steigungswinkel der Helixform relativ zu einer orthogonal zur Achse liegenden Radialebene der Fräserwelle im Bereich zwischen 4° und 8°, insbesondere im Bereich zwischen 4 und 6,5°, besonders bevorzugt im Bereich zwischen 4,5 und 6°.

Die Helixform des ersten Wälzfräsers ist dabei wiederum gegenläufig zu der Helixform des zweiten Wälzfräsers ausgestaltet. Eine Anzahl der Einläufe wird häufig auch durch eine Gangzahl angegeben. Bei einer geringeren Gangzahl sind Fertigungstoleranzen kleiner.

In einer Ausgestaltung weisen die Wälzfräser jeweils einen Einlauf, in denen an den Fräsen angeordnete Stollen mit dem Zahnradkranz in Eingriff gelangt, auf.

Hiermit liegt entsprechend dieser Ausgestaltung eine Gangzahl von eins vor. Eine niedrige Gangzahl führt bei ansonsten gleicher Anzahl an helixförmig angeordneten Stollen zu einer verringerten Materialmenge, die pro Stollen abgetragen werden muß. Dies hat wiederum eine geringere Verformung der einzelnen Stollen zur Folge. Weiterhin ist eine zwischen dem Stollen und dem abzutragenden Material herrschende Kraftausübung kleiner, wodurch auch eine Verformung im Material gering gehalten wird. Aufgrund dieser Effekte kann ein sauberer Span abgetragen werden. Es ist damit ersichtlich, dass bei einer geringeren Gangzahl ein Fräsvorgang zwar länger dauert, aber eine erhöhte Präzision erreicht wird. Die Fertigungstoleranzen sind somit bei der niedrigen Gangzahl von eins kleiner.

In einer Ausgestaltung liegt ein Steigungswinkel der Helixform relativ zu einer orthogonal zur Achse liegenden Radialebene der Fräserwelle im Bereich zwischen 15° und 20°, insbesondere im Bereich zwischen 16° und 18°.

Die Helixform des ersten Wälzfräsers ist dabei gegenläufig zu der Helixform des zweiten Wälzfräsers ausgestaltet. Dies breite Helixlücke kann durch das Vorsehen von zwei Wälzfräsen mit gegenläufigen Helixformen auf einer Welle vermieden werden.

In einer Ausgestaltung weisen die Wälzfräser jeweils drei Einläufe, in denen an den Walzfäsern angeordnete Stollen mit dem Zahnradkranz in Eingriff gelangt, auf.

In einer Ausgestaltung liegt ein Schrägungswinkel einer Schrägverzahnung der Zahnradkränze im Bereich zwischen 10° und 40°, insbesondere zwischen 10° und 35°, besonders bevorzugt als ganzzahliger, durch 5 teilbarer Winkel in Grad von einschließlich 15° bis einschließlich 30°.

Für doppelschrägverzahnte Zahnradkränze mit diesen Schrägungswinkeln ist der Zahnradfräser besonders geeignet.

In einer Ausgestaltung ist die Fäserwelle zweifach rotierbar gelagert, nämlich an einem Hauptlager, an dem auch ein Antrieb der Fräserwelle erfolgt, sowie an einem Gegenlager, so dass die Fräserwelle in radialer Richtung zweifach abgestützt ist.

Die zweifache Lagerung des Zahnradfräsers sorgt für eine hohe Steifigkeit des Zahnradfräsers relativ zu dem Zahnrad, wodurch eine Durchbiegung des Zahnradfräsers beim Fräsen erheblich verringert wird. Hierdurch können Fertigungstoleranzen weiter verringert werden bzw. eine Präzision kann erhöht werden.

In einer Ausgestaltung erstrecken sich die Wälzfräser axial jeweils über eine Wälzlänge, die zu 16% bis 30%, insbesondere zu 20% bis 26%, besonders bevorzugt zu 22% bis 24% einer Erstreckung des Zahnradfräsers von einem Hauptlager zu einem Gegenlager entspricht.

Anders ausgedrückt sind die Wälzfräser annähernd ein Viertel so lang wie die Fräserwelle. Es steht demnach ein großer Anteil - beide Wälzfräser eingerechnet fast die Hälfte - zur Ausbildung der Wälzfräsen zur Verfügung. Eine Länge, auf der sich die Fräswelle durchbiegen kann, ist demnach so klein wie möglich, wodurch unvermeidbare Fertigungstoleranzbereiche weiter reduziert werden können.

In einer Ausgestaltung weisen die Wälzfräser einen Durchmesser auf, der zu 12% bis 26%, insbesondere 16% bis 22%, besonders bevorzugt zu 18% bis 20% einer Erstreckung des Zahnradfräsers von einem Hauptlager zu einem Gegenlager entspricht.

Bei einer Erstreckung von 320 mm kann ein Durchmesser demnach 65 mm goß sein. Bei diesem Durchmesser kann die Helixlücke zwischen den beiden Zahnradkränzen klein gehalten werden.

In einer Ausgestaltung ist auf der Fräserwelle ein Zwischenraum zwischen den Wälzfräsern vorgesehen, der eine Zwischenraumlänge aufweist, die zu 9% bis 23%, insbesondere 13% bis 19%, besonders bevorzugt zu 15% bis 17% einer Erstreckung des Zahnradfräsers von einem Hauptlager zu einem Gegenlager entspricht.

Bei den genannten Bereichen für die Zwischenraumlänge kann wiederum eine Länge, auf der sich die Fräswelle durchbiegen kann, so gering wie möglich gehalten werden, wodurch wie erwähnt unvermeidbare Fertigungstoleranzbereiche reduziert werden.

In einer vorteilhaften Ausgestaltung der Erfindung kann möglich sein, dass auf der Fräserwelle ein Zwischenraum zwischen den Wälzfräsern vorgesehen ist, der eine Zwischenraumlänge aufweist, die weniger als 15%, vorzugsweise weniger als 10% einer Erstreckung des Zahnradfräsers von einem Hauptlager zu einem Gegenlager entspricht. Hierdurch können einerseits unvermeidbare Fertigungstoleranzbereiche weiter reduziert werden. Zudem kann ein sehr kompakter Zahnradfräser bereitgestellt werden.

Es ist gemäß Anspruch 13 vorgesehen, dass das Zahnrad während der Fertigung in der Fräsvorrichtung eingespannt bleibt, wobei der Zahnradfräser mit dem ersten Wälzfräser den ersten Zahnradkranz ausfräst, dann in radialer Richtung wegbewegt wird, und anschließend mit dem zweiten Wälzfräser der zweite Zahnradkranz gefräst wird.

Hierfür wird ein Verfahren gemäß Anspruch 14 zur Herstellung eines Zahnrads mit einer Doppelschrägverzahnung, mit den Schritten:

a. Bereitstellung eines Zahnradfräsers, der auf einer Fräserwelle einen ersten Wälzfräser zum Ausfräsen eines ersten Zahnradkranzes der Doppelschrägverzahnung und einen zweiten Wälzfräser zum Ausfräsen eines zweiten Zahnradkranzes der Doppelschrägverzahnung aufweist, wobei die Wälzfräser in einer Helixform um die Fräserwelle angeordnete Stollen aufweisen, wobei die Helixform des ersten Wälzfräsers gegenläufig zu der Helixform des zweiten Wälzfräsers ausgestaltet ist,

b. Bereitstellen eines um eine Rotationsachse rotierbaren Rohlings, der eine erste zylindrische Fläche und eine zweite zylindrische Fläche zur Ausbildung der späteren Zahnradkränze, sowie eine Helixlücke zwischen den zylindrischen Flächen aufweist,

c. Anordnen der um eine Achse rotierbaren Fräserwelle relativ zu einer Radialebene, die orthogonal zu der Rotationsachse des Rohlings des Zahnrads liegt, bei einen Einstellwinkel zwischen der Radialebene und der Achse von weniger als 20°,

d. Rotieren der Fräserwelle und in Eingriff bringen der ersten Wälzfräser mit der ersten Fläche und fräsen des ersten Zahnradkranzes,

e. Anordnen der Fräserwelle relativ zu der Radialebene bei einen Einstellwinkel von weniger als 20°,

f. in Eingriff bringen des zweiten Wälzfräsers mit der zweiten Fläche und Fräsen des zweiten Zahnradkranzes.

Das Fräsen erfolgt dabei durch ein Rotieren der Fräswelle und langsames Bewegen der Fräserwelle entlang dem auszufräsenden Zahnradkranz. Die Helixform der Wälzfräser treibt während dem Fräsen gleichzeitig das Zahnrad rotatorisch an. Dadurch, dass das Zahnrad während des gesamten Prozesses eingespannt bleiben kann, kann eine Lage des Zahnrads sehr genau erfaßt werden. Es muß lediglich der Fräser relativ zu dem Zahnrad ausgerichtet werden, das Zahnrad und seine Winkellage auf dem Fräser ist einer Fräsvorrichtung bzw. deren Steuereinrichtung in maschinenlesbarer Form bekannt.

Das Verfahren kann dadurch verfeinert werden, dass nach dem dem Schritt d. eine Winkellage des Zahnrads in der Rotationsachse in einer Steuereinrichtung gespeichert wird und die Fräserwelle relativ zu dem Zahnrad so angeordnet wird, dass beim in Eingriff bringen des Wälzfräsers und dem Fräsen des zweiten entstehende Zahnradflanken entstehen, die korrespondierend zu den Zahnflanken des ersten Zahnradkranzes ausgerichtet sind.

Bei dem ersten Eingriff des Wälzfräsers mit dem zweiten Zahnrad wird der Apexpunkt bereits festgelegt. Demnach zur Erreichung der Ausrichtung der Zahnflanken der erste Eingriff so vorzunehmen, dass der Apexpunkt mittig in der Helixlücke liegt.

In einer Ausgestaltung ist nach Schritt d. und nach einer Fertigstellung einer letzten Zahnreihe und einem außer Eingriff bringen der ersten Wälzfräse mit dem ersten Zahnradkranz eine Winkellage des Zahnrads in der Rotationsachse fixiert wird und die Fräserwelle relativ zu dem Zahnrad so angeordnet wird, dass beim in Eingriff bringen des Wälzfräsers und dem Fräsen des zweiten entstehende Zahnradflanken entstehen, die korrespondierend zu den Zahnflanken des ersten Zahnradkranzes ausgerichtet sind.

Es ist vorgesehen, dass eine erste Vorschubrichtung, in der die Fräswelle während des Fräsens an dem ersten Zahnradkranz bewegt wird, von außen hin zu einer Helixlücke zwischen den Zahnradkränzen verläuft, und eine zweite Vorschubrichtung, in der die Fräswelle während des Fräsens an dem zweiten Zahnradkranz bewegt wird, von außen hin zu der Helixlücke verläuft.

Durch diese Vorschubrichtung wird es möglich, die Fräserwelle zur Ausrichtung genau auf das Zahnrad zu zu bewegen, bevor der Fräsvorgang startet. Bei einem Start von der Helixlücke ausgehend müßte hierfür die Helixlücke vergrößert werden.

Es kann vorgesehen sein, dass der erste Zahnradkranz im Gegenlauffräsen ausgefräst wird, die Fräserwelle also entgegen einer ersten Vorschubrichtung am Zahnradkranz fräst, und der zweite Zahnradkranz ebenfalls im Gleichlauffräsen ausgefräst wird, die Fräserwelle also mit einer zweiten Vorschubrichtung am zweiten Zahnradkranz fräst.

Es kann vorgesehen auch sein, dass der erste Zahnradkranz im Gleichlauffräsen ausgefräst wird, die Fräserwelle also in einer ersten Vorschubrichtung am Zahnradkranz fräst, und der zweite Zahnradkranz ebenfalls im Gleichlauffräsen ausgefräst wird, die Fräserwelle also mit einer zweiten Vorschubrichtung am zweiten Zahnradkranz fräst.

## Kurzbeschreibung der Figuren

Die hierin beschriebenen Zeichnungen dienen nur zu Veranschaulichungszwecken und sollen den Umfang der vorliegenden Offenbarung in keiner Weise einschränken. Es zeigen:

Fig. 1: schematisch einen Ausschnitt eines Zahnrads, wobei das Zahnrad einen ersten schrägverzahnten Zahnradkranz und einen zweiten schrägverzahnten Zahnradkranz aufweist,

Fig. 2: einen zweifach gelagerten Zahnradfräser, der helixförmig um eine Fräserwelle verlaufende Wälzfräser aufweist, wobei ein Steigungswinkel B der Helixform relativ zu einer Radialebene der Fräserwelle vorgegeben ist, wobei der Steigungswinkel B 4,67° bis 5,94° entspricht,

Fig. 3: einen zweifach gelagerten Zahnradfräser, der helixförmig um eine Fräserwelle verlaufende Wälzfräser aufweist, wobei ein Steigungswinkel B' der Helixform relativ zu einer Radialebene der Fräserwelle vorgegeben ist, wobei der Steigungswinkel B' 17,67° entspricht,

Fig. 4: in einen Schnitt durch einen Walzfräser entsprechend den Figuren 2 und 3 eine Fräserwelle mit sich radial daraus erstreckenden Stollen,

Fig. 5: schematisch einen Abschnitt eines Zahnradrohlings mit einem ersten halb gefertigten schrägverzahnten Zahnradkranz, mit einem Fräswerkzeug, das einen ersten Wälzfräser und einen zweiten Wälzfräser aufweist, wobei ein erster Wälzfräser gerade einen ersten Zahnradkranz ausfräst,

Fig. 6: schematisch den Zahnradrohling aus Figur 6, wobei ein nun zweiter Wälzfräser nun den zweiten Zahnradkranz ausfräst, und

Fig. 7: schematisch einen Verfahrensablauf, der in einer Fräsvorrichtung ablaufen kann, um ein doppelschrägverzahntes Zahnrad zu fertigen.

## Ausführliche Beschreibung der Figuren

Die folgende Beschreibung ist dem Wesen nach lediglich veranschaulichend. Der Klarheit halber sind in den Zeichnungen zur Bezeichnung ähnlicher Elemente dieselben Bezugzeichen verwendet.

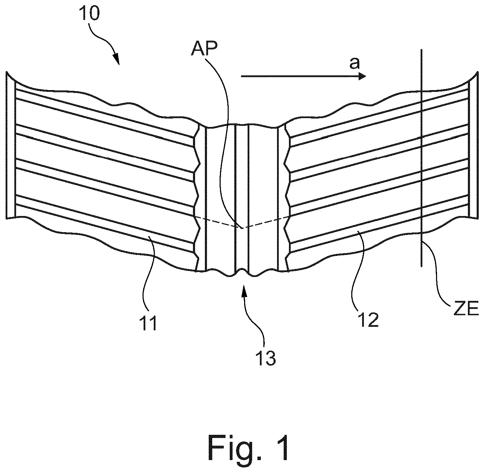

Figur 1 zeigt einen Ausschnitt eines Zahnrads 10 aus einer radialen Perspektive, wobei das Zahnrad 10 einen ersten schrägverzahnten Zahnradkranz 11 und einen zweiten schrägverzahnten Zahnradkranz 12 aufweist. In axialer Richtung a gesehen zwischen den Zahnradkränzen 11 und 12 ist eine Helixlücke 13 vorgesehen. Die Helixlücke 13 wird durch eine vollumfänglich um das Zahnrad 10 verlaufende Einbuchtung gebildet. Die Helixlücke 13 dient vornehmlich dazu, einen Auslauf von in den weiteren Figuren näher erläutertem Wälzfräsen 21 und 22 zu ermöglichen. Mit dem Auslauf ist ein Freiraum gemeint, in dem bei der Fertigung des einen Zahnradkranzes 11 oder 12 der entsprechende Wälzfräser 21 bzw. 22 rotieren kann, ohne die jeweils andere Zahnradkranz 12 oder 11 zu berühren. Ein gattungsgemäßes Zahnrad 10 ist so zu fertigen, dass ein Apexpunkt AP als virtueller Schnittpunkt von in die Helixlücke 13 gedacht verlängerten Zahnradflanken möglichst mittig in der Helixlücke 13 liegt.

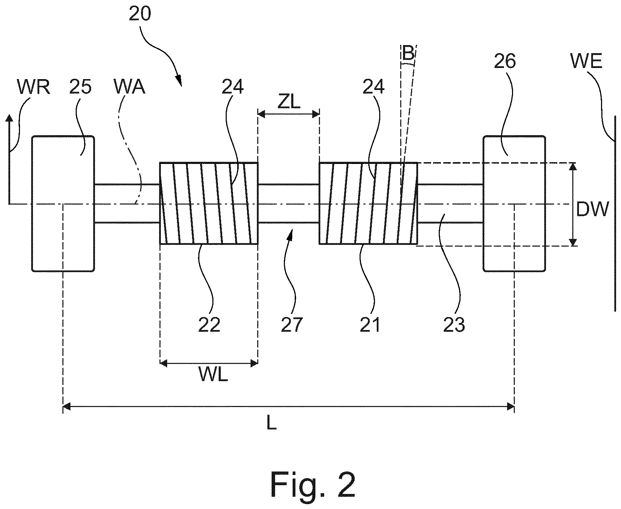

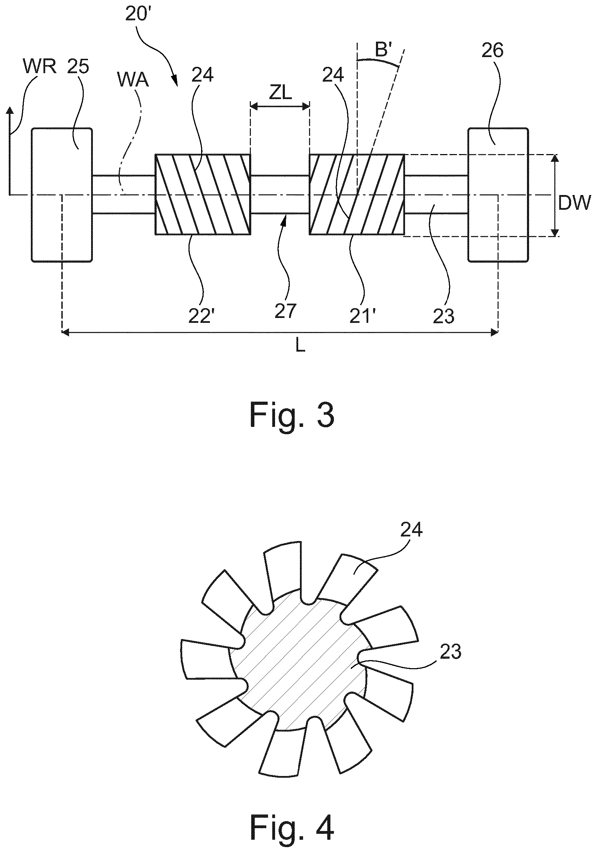

Ein erfindungsgemäßer Zahnradfräser 20, 20' ist in den Figuren 2 und 3 dargestellt. Der Zahnradfräser 20 weist eine Vielzahl an helixförmig um eine Fräserwelle 23 angeordnete, schematisch nur als Striche angedeutete Stollen 24 auf, die ausgeformt in Figur 4 dargestellt sind. Die Stollen 24 sind in entlang einer Achse WA gegeneinander leicht versetzt, wodurch sich die besagte Helixform ergibt. An den Stollen 24 sind nicht dargestellte Schneiden angeordnet. Der Wälzfräser 20 und die Zahnradkränze 11 oder 12 des Zahnrads 10 wälzen während bei einer Fertigung eines Zahnrads 10 aufeinander ab. Unter einem Vorschub des Wälzfräsers 20 in einer radialen Richtung WR sowie einer Rotation der Fräserwelle 21 um die Achse WA und einer Rotation des Zahnrads 10 um dessen Rotationsachse ZA werden mit den Schneiden ebenfalls nicht dargestellte Späne abgehoben. Dies gilt für die Fräswellen gemäß den Figuren 4 bis 6 gleichermaßen.

Die offenbarungsgemäße Fäserwelle 23 ist um die Achse WA zweifach rotierbar gelagert, wodurch eine sehr steife Einspannung des Zahnradfräsers 20 ermöglicht wird. Die Lagerung erfolgt an einem Hauptlager 25, an dem auch ein nicht dargestellter Antrieb der Fräserwelle 23 vorgesehen ist, sowie an einem Gegenlager 26. Demnach ist die Fräserwelle 23 in radialer Richtung WR zweifach abgestützt. Dadurch wird eine hohe Steifigkeit des Zahnradfräsers 20, 20' sichergestellt. Dies gilt für die Fräswellen 23 gemäß den Figuren 2 bis 6 gleichermaßen.

Weitere Maßnahmen zur Erhöhung der Steifigkeit ist eine Beschränkung einer Länge L zwischen dem Hauptlager 25 und dem Gegenlager 26 auf ein notwendiges Maximum. Als vorteilhaft haben sich die in den folgenden Sätzen wiedergegebenen Abmessungen erwiesen. Eine Wälzlänge WL entspricht der Erstreckung L zu 16% bis 30%, insbesondere zu 20% bis 26%, besonders bevorzugt zu 22% bis 24%. Bei einer beispielhaften Erstreckung von L = 320 mm liegt demnach eine Wälzlänge WL von 75 mm in den genannten Bereichen. Dies gilt für die Fräswellen 23 gemäß den Figuren 2 bis 6 gleichermaßen.

Weiterhin hat sich ein Durchmesser DW als vorteilhaft erwiesen, der zu 12% bis 26%, insbesondere 16% bis 22%, besonders bevorzugt zu 18% bis 20% einer Erstreckung L des Zahnradfräsers 20, 20' von einem Hauptlager 25 zu einem Gegenlager 26 entspricht. Bei einer beispielhaften Erstreckung von L = 320 mm liegt demnach ein Durchmesser DW von 60 mm vor. Dies gilt für die Fräswellen 23 gemäß den Figuren 2 bis 6 gleichermaßen.

Zwischen den Wälzfräsen 21 und 22 befindet sich ein Zwischenraum 27. Dieser sollte ebenfalls möglichst kurz ausgebildet sein, damit eine hohe Steifigkeit des Zahnradfräsers 20 erreicht werden kann. Als vorteilhaft hat sich ein Zwischenraum 27 zwischen den Wälzfräsern 21, 22, 21', 22' erwiesen, der eine Zwischenraumlänge ZL aufweist, die zu 9% bis 23%, insbesondere 13% bis 19%, besonders bevorzugt zu 15% bis 17% einer Erstreckung L des Zahnradfräsers 20 von einem Hauptlager 25 zu einem Gegenlager 26 entspricht. Dies gilt ebenfalls für die Fräswellen gemäß den Figuren 2 bis 6 gleichermaßen.

In Figur 2 weisen der erste Wälzfräser 21 und der zweite Wälzfräser 22 gegenläufig zueinander verlaufenden Helixformen angeordnete Stollen 24 auf. Ein Steigungswinkel B der Helixform relativ zu einer Radialebene WE der Fräserwelle 23 liegt in bei dem in Figur 2 dargestellten Wälzfräsen bei 4,67°, in einer alternativen Ausführungsform bei 5,94°. Ein Unterschied dieser Steigungswinkel B ist bei der Auflösung nicht darstellbar und auch nicht notwendig. Erste Tests mit den beiden Winkeln führten jedenfalls zu präzise gefertigten Zahnrädern 10 mit sehr geringen Fertigungstoleranzen und einem präzise mittig liegenden Apexpunkt AP.

In Figur 3 weisen der erste Wälzfräser 21' und der zweite Wälzfräser 22' einen Steigungswinkel B' von 17, 62° auf.

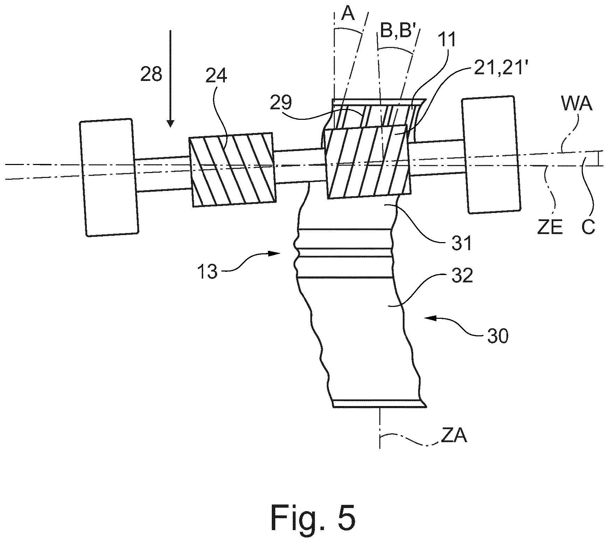

Der Fräsvorgang gestaltet sich nun wie in den Figuren 5 bis 7 beschrieben. In Figur 5 erkennt man, dass die Achse WA der Fräserwelle 23 relativ zu einer Radialebene ZE, die orthogonal zu einer Rotationsachse ZA des Zahnradkranzes 11, 12 liegt, einen Einstellwinkel C von weniger als 20° aufweist, wenn einer der Wälzfräser 21, 22, 21', 22' in Eingriff mit der jeweiligen Zahnradkranz 11, 12 befindlich ist.

In Figur 5 wird soeben der erste Zahnradkranz 11 mit dem ersten Wälzfräser 21 oder 21' ausgefräst. Der Übersicht halber ist in Figur 5 nur ein Schrägungswinkel A dargestellt. Das hierin Gesagte gilt jedoch gleichermaßen für verschiedenste Schrägungswinkel A der Doppelschrägverzahnung. Es ist vorgesehen, dass der Schrägungswinkel A Zahnradkränze 11, 12 im Bereich zwischen 10° und 40° liegt. Bevorzugt werden durch 5 teilbare Schrägungswinkel A im genannten Bereich gewählt.

Der Einstellwinkel C errechnet sich aus dem Schrägungswinkel A der Zahnradkränze und dem Steigungswinkel B, B' der Wälzfräser 21, 22, 21', 22' wie folgt:

$$C = A - B.$$

Bei einem Steigungswinkel B zwischen 4,67° und 5,94° entsprechend Figur 2 und einem Schrägungswinkel A von 20° beträgt der Einstellwinkel C somit 14,06° bis 15,33°.

Bei einem Steigungswinkel B' von 17,67° entsprechend Figur 2 und einem Schrägungswinkel A von 30° beträgt der Einstellwinkel C' somit 12,33°. Es ist für einen ruhigen Lauf eines Planetenradgetriebes vorteilhaft, einen großen Schrägungswinkel A zu wählen, da hierdurch die einzelnen Zähne langsamer miteinander in Eingriff gelangen und auch langsamer voneinander getrennt werden, was insgesamt geringere Geräuschemissionen verursacht.

Es ist vorgesehen, dass das Zahnrad 10 während der Fertigung in der Fräsvorrichtung eingespannt bleibt, wobei der Zahnradfräser 20 mit dem ersten Wälzfräser 21, 21' den ersten Zahnradkranz 11 ausfräst, dann in radialer Richtung wegbewegt wird, und anschließend mit dem zweiten Wälzfräser 22, 22' der zweite Zahnradkranz 12 gefräst wird. Der erste Wälzfräser 21, 21' wird während des Fräsvorgangs des ersten Zahnradkranzes 11 in einer ersten Vorschubrichtung 28 von außen auf die Helixlücke 13 zu bewegt. Bei einem Gegenlauffräsen wird der Wälzfräser 21, 21' dabei so rotiert, dass die im Eingriff mit dem Zahnradkranz 11 befindlichen Stollen 24 an dem Wälzfräser 21, 21' entgegen der Vorschubrichtung 28 des Zahnradkranzes 11 bewegt werden. Es ist auch möglich, den ersten Zahnradkranz 11 im Gleichlauffräsen zu fertigen.

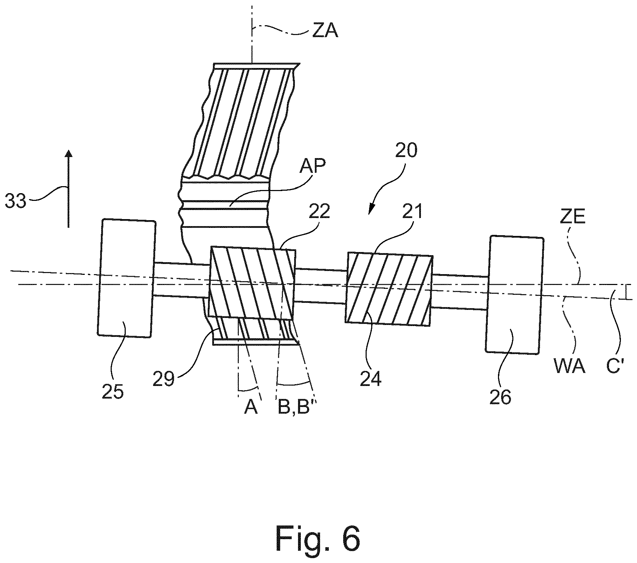

Die Bewegung des Zahnradfräsers 20 in der Vorschubrichtung 28 stoppt, wenn der erste Zahnradkranz 21 vollständig ausgefräst wurde. Nunmehr wird der Zahnradfräser 20 von dem Zahnrad 10 weg bewegt, entsprechend einem Eingriffswinkel C' für den zweiten Zahnradkranz 12 gekippt und von außen in Eingriff mit dem späteren zweiten Zahnradkranz 12 gebracht. Eine Winkellage des Zahnrads 10 ist dabei bekannt. Ein erster Eingriff des zweiten Wälzfräsers 22, 22' mit dem späteren zweiten Zahnradkranz 12 bestimmt bereits die Lage des Apexpunkts AP. Der erste Eingriff des zweiten Wälzfräsers 22, 22' mit dem zweiten Zahnradkranz 12 ist demnach so durchzuführen, dass die gebildete Zahnradflanken 29 der Schrägverzahnung des ersten Zahnradkranzes 11 entspricht bzw. der Apexpunkt AP in bekannter Weise mittig liegt. Hierfür ist es vorteilhaft, dass der zweite Wälzfräser 22, 22' von außen, in einer richtigen Winkellage um die Achse WA des Zahnradfräsers 20, in einer zweiten Vorschubrichtung 33 dem Zahnrad 10 angenähert werden kann, bevor der Fräsvorgang durch Rotation des Wälzfräsers 22, 22' bzw. der Fräserwelle 23 startet. Bei einem in Figur 6 angedeuteten Gleichlauffräsen wird der Wälzfräser 22, 22' dabei so rotiert, dass die im Eingriff mit dem Zahnradkranz 12 befindlichen Stollen 24 an dem Wälzfräser 22, 22' entgegen der Vorschubrichtung 33 bewegt werden. Es ist auch denkbar, den zweiten Zahnradkranz 12 im Gegenlauffräsen zu fertigen.

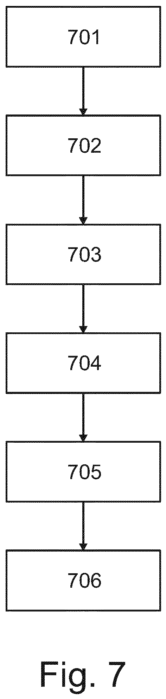

In Figur 7 ist schematisch ein Verfahrensablauf dargestellt, dass in einer ansonsten nicht dargestellten Fräsvorrichtung implementiert sein kann, um ein schrägverzahntes Zahnrad 10 zu fräsen. In Schritt 701 erfolgt das Bereitstellung eines Zahnradfräsers 20, der auf einer Fräserwelle 23 einen ersten Wälzfräser 21, 21' zum Ausfräsen eines ersten Zahnradkranzes 11 der Doppelschrägverzahnung und einen zweiten Wälzfräser 22, 22' zum Ausfräsen eines zweiten Zahnradkranzes 12 der Doppelschrägverzahnung aufweist. In Schritt 702 erfolgt das Bereitstellen eines um eine Rotationsachse ZA rotierbaren Rohlings 30, der eine erste zylindrische Fläche 31 und eine zweite zylindrische Fläche 32 zur Ausbildung der späteren Zahnradkränze 11 und 12 sowie bereits eine Helixlücke 13 zwischen den zylindrischen Flächen 31 und 32 aufweist. In Schritt 703 erfolgt das Anordnen der um eine Achse WA rotierbaren Fräserwelle 23 relativ zu einer Radialebene ZE, die orthogonal zu der Rotationsachse ZA des Rohlings 30 des Zahnrads 10 liegt, bei einen Einstellwinkel C zwischen der Radialebene ZE und der Achse WA von weniger als 20°, gemäß Figur 5. In Schritt 704 erfolgt das Rotieren der Fräserwelle 23 und ein in Eingriff bringen des ersten Wälzfräsers 21, 21' mit der ersten Fläche 31 und Fräsen des ersten Zahnradkranzes 11 in Vorschubrichtung 28. In Schritt 705 erfolgt das Anordnen der Fräserwelle 23 relativ zu der Radialebene ZE bei einen Einstellwinkel C' von weniger als 20° entsprechend Figur 6. In Schritt 706 erfolgt das in Eingriff Bringen des zweiten Wälzfräsers 22 mit der zweiten Fläche 32 so, dass der Apexpunkt AP getroffen wird und das Fräsen des zweiten Zahnradkranzes 12 in der zweiten Vorschubrichtung 33 von außen nach innen hin zu der Helixlücke 13.

Dabei kann in einer Ausgestaltung eine Winkellage des Zahnrads 10 in der Rotationsachse ZA in einer nicht dargestellten Steuereinrichtung gespeichert werden und die Fräserwelle 23 relativ zu dem Zahnrad 10 so angeordnet werden, dass beim in Eingriff bringen des zweiten Wälzfräsers 22, 22' und dem Fräsen des zweiten Zahnradkranzes 12 Zahnradflanken 29 entstehen, die korrespondierend zu den Zahnflanken 29 des ersten Zahnradkranzes 11 ausgerichtet sind, bzw. der Apexpunkt AP mittig liegt.

Alternativ oder ergänzend kann nach Schritt 704 nach einer Fertigstellung einer letzten Zahnreihe und einem außer Eingriff bringen der ersten Wälzfräse 21, 21' mit dem ersten Zahnradkranz 11 eine Winkellage des Zahnrads 10 in der Rotationsachse ZA fixiert wird und die Fräserwelle 23 relativ zu dem Zahnrad 10 so angeordnet werden, dass beim in Eingriff bringen des zweiten Wälzfräsers 22, 22' mit der zweiten Fläche 32 und dem Fräsen des zweiten Zahnradkranzes 12 die entstehenden Zahnradflanken 29 des zweiten Zahnradkranzes 12 korrespondierend zu den Zahnflanken 29 des ersten Zahnradkranzes 11 ausgerichtet sind. Ist dies der Fall, sollte auch der Apexpunkt AP mittig liegen.

Es kann vorgesehen sein, dass der erste Zahnradkranz 11 im Gegenlauffräsen ausgefräst wird, die Fräserwelle 23 also entgegen der ersten Vorschubrichtung 28 am Zahnradkranz fräst, und der zweite Zahnradkranz 12 im Gleichlauffräsen ausgefräst wird, die Fräserwelle 23 also mit der zweiten Vorschubrichtung 33 am zweiten Zahnradkranz 12 fräst.

Es kann alternativ vorgesehen sein, dass erste Zahnradkranz 11 im Gleichlauffräsen ausgefräst wird, die Fräserwelle 23 also in der ersten Vorschubrichtung 28 am Zahnradkranz fräst, und der zweite Zahnradkranz 12 ebenfalls im Gleichlauffräsen ausgefräst wird, die Fräserwelle 23 also mit der zweiten Vorschubrichtung 33 am zweiten Zahnradkranz 12 fräst.

**Bezugszeichenliste**

10      Zahnrad

| 11 | Zahnradkranz |
| 12 | Zahnradkranz |
| 13 | Helixlücke |
| 20 | Zahnradfräser |
| 20' | Zahnradfräser |
| 21 | Wälzfräser |
| 21' | Wälzfräser |
| 22 | Wälzfräser |
| 22' | Wälzfräser |
| 23 | Fräserwelle |
| 24 | Stollen |
| 25 | Hauptlager |
| 26 | Gegenlager |
| 27 | Zwischenraum |
| 28 | Vorschubrichtung |
| 29 | Zahnflanken |
| 30 | Rohling |
| 31 | Fläche |
| 32 | Fläche |
| 33 | Vorschubrichtung |
| AP | Apexpunkt |
| A | Schrägungswinkel |
| B | Steigungswinkel |
| B' | Steigungswinkel |
| C | Einstellwinkel |
| C' | Einstellwinkel |
| DW | Durchmesser der Wälzfräse |
| L | Erstreckung |
| WA | Achse des Zahnradfräsers |
| WE | Radialebene der Fräserwelle |
| WL | Wälzlänge |
| WR | radiale Richtung |
| ZA | Rotationsachse des Zahnrads |
| ZE | Radialebene am Zahnrad |
| ZL | Zwischenraumlänge |

**Patentansprüche**

1.  Zahnradfräser (20, 20') zum Fräsen eines Zahnrads (10), wobei das Zahnrad (10) einen ersten schrägverzahnten Zahnradkranz (11) und einen zweiten schrägverzahnten Zahnradkranz (12) aufweist, wobei der Zahnradfräser (20, 20) auf einer um eine Achse (WA) rotierbar gelagerte Fräserwelle (23) einen ersten Wälzfräser (21, 21) zum Ausfräsen des ersten Zahnradkranzes (11) und einen zweiten Wälzfräser (22, 22) zum Ausfräsen des zweiten Zahnradkranzes (12) aufweist, **dadurch gekennzeichnet, dass** die Fräserwelle (23) und der erste Wälzfräser (21, 21') und der zweite Wälzfräser (22, 22') einstückig ausgebildet sind und die jeweiligen Außendurchmesser der Wälzfräser (21, 21', 22, 22') identisch sind, wobei die Wälzfräser (21, 21', 22, 22') in einer Helixform um die Fräserwelle (23) angeordnete Stollen (24) aufweisen, wobei die Helixform des ersten Wälzfräsers (21, 21') gegenläufig zu der Helixform des zweiten Wälzfräsers (22, 22') ausgestaltet ist.

2.  Zahnradfräser (20, 20) nach Anspruch 1, **dadurch gekennzeichnet, dass** die Achse (WA) der Fräserwelle (23) relativ zu einer Radialebene (ZE), die orthogonal zu einer Rotationsachse (ZA) des Zahnradkranzes (11, 12) liegt, einen Einstellwinkel (C) von weniger als 20° aufweist, wenn einer der Wälzfräser (21, 21 22, 22) in Eingriff mit der jeweiligen Zahnradkranz (11, 12) befindlich ist.

3.  Zahnradfräser (20) nach Anspruch 1 oder 2, **dadurch gekennzeichnet, dass** ein Steigungswinkel (B) der Helixform relativ zu einer orthogonal zur Achse (A) liegenden Radialebene (WE) der Fräserwelle (23) im Bereich zwischen 4° und 8°, insbesondere im Bereich zwischen 4 und 6,5°, besonders bevorzugt im Bereich zwischen 4,5 und 6° liegt.

4.  Zahnradfräser (20) nach Anspruch 3, **dadurch gekennzeichnet, dass** die Wälzfräser (21, 22) jeweils einen Einlauf, in denen an den Fräsen angeordnete Stollen (24) mit dem Zahnradkranz (11, 12) in Eingriff gelangt, aufweisen.

5.  Zahnradfräser (20) nach Anspruch 1 oder 2, **dadurch gekennzeichnet, dass** ein Steigungswinkel (B) der Helixform relativ zu einer orthogonal zur Achse (A) liegenden Radialebene (WE) der Fräserwelle (23) im Bereich zwischen 15° und 20°, insbesondere im Bereich zwischen 16° und 18° liegt.

6.  Zahnradfräser (20) nach Anspruch 5, **dadurch gekennzeichnet, dass** die Wälzfräser (21, 22) jeweils drei Einläufe, in denen an den Walzfräsern (21, 21, 22, 22) angeordnete Stollen (24) mit dem Zahnradkranz (11, 12) in Eingriff gelangt, aufweist.

7.  Zahnradfräser (20, 20) nach einem der Ansprüche 1 bis 6, **dadurch gekennzeichnet, dass** ein Schrägungswinkel (A) einer Schrägverzahnung der Zahnradkränze (21, 22) im Bereich zwischen 10° und 40°, insbesondere zwischen 10° und 35° liegt, besonders bevorzugt als ganzzahliger, durch 5 teilbarer Winkel in Grad von einschließlich 15° bis einschließlich 30°.

8.  Zahnradfräser (20, 20) nach einem der Ansprüche 1 bis 7, **dadurch gekennzeichnet, dass** die Fräserwelle (23) zweifach um die Achse (A) rotierbar gelagert ist, nämlich an einem Hauptlager (25), an dem auch ein Antrieb der Fräserwelle (23) erfolgt, sowie an einem Gegenlager (26), so dass die Fräserwelle (23) in radialer Richtung (WR) zweifach abgestützt ist.

9.  Zahnradfräser (20) nach einem der Ansprüche 1 bis 8, **dadurch gekennzeichnet, dass** sich die Wälzfräser (21, 21, 22, 22) axial jeweils über eine Wälzlänge (WL) erstrecken, die zu 16% bis 30%, insbesondere zu 20% bis 26%, besonders bevorzugt zu 22% bis 24% einer Erstreckung (L) des Zahnradfräsers (20, 20) von einem Hauptlager (25) zu einem Gegenlager (26) entspricht.

10. Zahnradfräser (20) nach einem der Ansprüche 1 bis 9, **dadurch gekennzeichnet, dass** die Wälzfräser (21, 21, 22, 22) einen Durchmesser (DW) aufweisen, der zu 12% bis 26%, insbesondere 16% bis 22%, besonders bevorzugt zu 18% bis 20% einer Erstreckung (L) des Zahnradfräsers (20) von einem Hauptlager (25) zu einem Gegenlager (26) entspricht.

11. Zahnradfräser (20, 20) nach einem der Ansprüche 1 bis 10, **dadurch gekennzeichnet, dass** auf der Fräserwelle (23) ein Zwischenraum (27) zwischen den Wälzfräsern (21, 21, 22, 22) vorgesehen ist, der eine Zwischenraumlänge (ZL) aufweist, die zu 9% bis 23%, insbesondere 13% bis 19%, besonders bevorzugt zu 15% bis 17% einer Erstreckung (L) des Zahnradfräsers (20, 20) von einem Hauptlager (25) zu einem Gegenlager (26) entspricht.

12. Zahnradfräser (20, 20') nach einem der Ansprüche 1 bis 10, **dadurch gekennzeichnet, dass** auf der Fräserwelle (23) ein Zwischenraum (27) zwischen den Wälzfräsern (21, 21', 22, 22') vorgesehen ist, der eine Zwischenraumlänge (ZL) aufweist, die weniger als 15%, vorzugsweise weniger als 10% einer Erstreckung (L) des Zahnradfräsers (20, 20') von einem Hauptlager (25) zu einem Gegenlager (26) entspricht.

13. Verwendung eines Zahnradfräsers (20, 20) nach einem der Ansprüche 1 bis 12 zur Fertigung eines doppelschrägverzahnten Zahnrads (10) in einer Fräsvorrichtung, **dadurch gekennzeichnet, dass** das Zahnrad (10) während der Fertigung in der Fräsvorrichtung eingespannt bleibt, und wobei der Zahnradfräser (20) mit dem ersten Wälzfräser (21) den ersten Zahnradkranz (11) ausfräst, dann in radialer Richtung vom Zahnrad (1) weg bewegt wird, und anschließend mit dem zweiten Wälzfräser (22) der zweite Zahnradkranz (12) gefräst wird.

14. Verfahren zur Herstellung eines Zahnrads (10) mit einer Doppelschrägverzahnung, mit den Schritten:

a. Bereitstellung eines Zahnradfräsers (20), der auf einer Fräserwelle (23) einen ersten Wälzfräser (21, 21) zum Ausfräsen eines ersten Zahnradkranzes (12) der Doppelschrägverzahnung und einen zweiten Wälzfräser (22, 22) zum Ausfräsen eines zweiten Zahnradkranzes (12) der Doppelschrägverzahnung aufweist, wobei die Wälzfräser (21, 21, 22, 22) in einer Helixform um die Fräserwelle (23) angeordnete Stollen (24) aufweisen, wobei die Helixform des ersten Wälzfräsers (21, 21) gegenläufig zu der Helixform des zweiten Wälzfräsers (22, 22) ausgestaltet ist,

b. Bereitstellen eines um eine Rotationsachse (ZA) rotierbaren Rohlings (30), der eine erste zylindrische Fläche (31) und eine zweite zylindrische Fläche (32) zur Ausbildung der späteren Zahnradkränze (11), sowie eine Helixlücke (13) zwischen den zylindrischen Flächen (31, 32) aufweist,

c. Anordnen der um eine Achse (WA) rotierbaren Fräserwelle (23) relativ zu einer Radialebene (ZE), die orthogonal zu der Rotationsachse (ZA) des Rohlings des Zahnrads (10) liegt, bei einen Einstellwinkel (C) zwischen der Radialebene (ZE) und der Achse (WA) von weniger als 20°,

d. Rotieren der Fräserwelle (23) und in Eingriff bringen des ersten Wälzfräsers (21, 21) mit der ersten Fläche (31) und Fräsen des ersten Zahnradkranzes (11),

e. Anordnen der Fräserwelle (23) relativ zu der Radialebene (ZE) bei einen Einstellwinkel (C) von weniger als 20°,

f. in Eingriff bringen des zweiten Wälzfräsers (22, 22) mit der zweiten Fläche (32) und Fräsen des zweiten Zahnradkranzes (12).

15. Verfahren nach Anspruch 14, **dadurch gekennzeichnet, dass** nach dem Schritt d. eine Winkellage des Zahnrads (10) in der Rotationsachse (ZA) in einer Steuereinrichtung gespeichert wird und die Fräserwelle (23) relativ zu dem Zahnrad (10) so angeordnet wird, dass beim in Eingriff bringen des zweiten Wälzfräsers (22, 22) und dem Fräsen des zweiten Zahnradkranzes (12) Zahnradflanken (29) entstehen, die korrespondierend zu den Zahnflanken (29) des ersten Zahnradkranzes (11) ausgerichtet sind.

16. Verfahren nach Anspruch 14, **dadurch gekennzeichnet, dass** dem Schritt d. und nach einer Fertigstellung einer letzten Zahnreihe und einem außer Eingriff bringen des ersten Wälzfräsers (21, 21) mit dem ersten Zahnradkranz (11) eine Winkellage des Zahnrads (10) in der Rotationsachse (ZA) fixiert wird und die Fräserwelle (23) relativ zu dem Zahnrad (10) so angeordnet wird, dass beim in Eingriff bringen des zweiten Wälzfräsers (22, 22) und dem Fräsen des zweiten Zahnradkranzes (12) Zahnradflanken (29) entstehen, die korrespondierend zu den Zahnflanken (29) des ersten Zahnradkranzes (11) ausgerichtet sind.

17. Verfahren nach Anspruch 14, **dadurch gekennzeichnet, dass** eine erste Vorschubrichtung (28), in der die Fräswelle (23) während des Fräsens an dem ersten Zahnradkranz (11) bewegt wird, von außen hin zu einer Helixlücke (13) zwischen den Zahnradkränzen (11, 12) verläuft, und eine zweite Vorschubrichtung (33), in der die Fräswelle (23) während des Fräsens an dem zweiten Zahnradkranz (12) bewegt wird, von außen hin zu der Helixlücke (12) verläuft.

## Claims

1. Gear milling cutter (20, 20') for milling a gear (10), the gear (10) having a first helical gear rim (11) and a second helical gear rim (12), the gear milling cutter (20, 20) having, on a milling shaft (23) mounted rotatably about an axis (WA), a first hob cutter (21, 21) for milling out the first gear rim (11) and a second hob cutter (22, 22) for milling out the second gear rim (12), **characterized in that**, the milling shaft (23) and the first hob cutter (21, 21') and the second hob cutter (22, 22') are formed in one piece and the respective external diameters of the hob cutters (21, 21', 22, 22') are identical, wherein the hob cutters (21, 21', 22, 22') have studs (24) arranged in a helical shape around the milling shaft (23), the helical shape of the first hob cutter (21, 21') being designed in the opposite direction to the helical shape of the second hob cutter (22, 22').

2. Gear milling cutter (20, 20) according to claim 1, **characterized in that**, the axis (WA) of the milling shaft (23) has, relative to a radial plane (ZE) which is orthogonal to an axis of rotation (ZA) of the gear rim (11, 12), an angle of incidence (C) of less than 20° when one of the hob cutters (21, 21 22, 22) is in engagement with the respective gear rim (11, 12).

3. Gear milling cutter (20) according to claim 1 or 2, **characterized in that**, a pitch angle (B) of the helical shape relative to a radial plane (WE) of the milling shaft (23) is in the range between 4° and 8°, in particular in the range between 4 and 6.5°, particularly preferably in the range between 4.5 and 6° lying orthogonally to the axis (A).

4. Gear milling cutter (20) according to claim 3, **characterized in that**, the hob cutters (21, 22) each have an inlet in which studs (24) arranged on the hob cutters engage with the gear rim (11, 12).

5. Gear milling cutter (20) according to claim 1 or 2, **characterized in that**, a pitch angle (B) of the helical shape relative to a radial plane (WE) of the milling shaft (23) lying orthogonally to the axis (A) is in the range between 15° and 20°, in particular in the range between 16° and 18°.

6. Gear milling cutter (20) according to claim 5, **characterized in that**, the hob cutters (21, 22) each have three inlets in which studs (24), arranged on the hob cutters (21, 22, 22, 22), engage with the gear rim (11, 12).

7. Gear milling cutter (20, 20) according to one of claims 1 to 6, **characterized in that**, the angle of inclination (A) of a helical gearing of the gear rims (21, 22) is in the range between 10° and 40°, in particular between 10° and 35°, preferably as an integral angle, divisible by 5, in degrees from 15° to 30° inclusive.

8. Gear milling cutter (20, 20) according to one of claims 1 to 7, characterized that, the milling shaft (23) is mounted such that it can rotate twice about the axis (A), namely on a main bearing (25), on which the milling shaft (23) is also driven, and on a counter-bearing (26), so that the milling shaft (23) is supported twice in the radial direction (WR).

9. Gear milling cutter (20) according to one of claims 1 to 8, **characterized in that**, the hob cutters (21, 21, 22, 22) each extend axially over a rolling length (WL) which is 16% to 30%, in particular 20% to 26%, particularly preferably 22% to 24%, of an extension (L) of the gear milling cutter (20, 20) from a main bearing (25) to a counter-bearing (26).

10. Gear milling cutter (20) according to one of claims 1 to 9, **characterized in that**, the hob cutters (21, 21, 22, 22) have a diameter (DW) which corresponds to 12% to 26%, in particular 16% to 22%, particularly preferably 18% to 20%, of an extension (L) of the gear cutter (20) from a main bearing (25) to a counter-bearing (26).

11. Gear milling cutter (20, 20) according to one of claims 1 to 10, **characterized in that** a space (27) is provided on the milling shaft (23) between the hob cutters (21, 21, 22, 22), which has a space length (ZL) which is 9% to 23%, in particular 13% to 19%, preferably 15% to 17%, of an extension (L) of the gear cutter (20, 20) from a main bearing (25) to a counter-bearing (26).

12. Gear milling cutter (20, 20') according to one of claims 1 to 10, **characterized in that**, an intermediate space (27) between the hob cutters (21, 21', 22, 22') is provided on the milling shaft (23) which has a length (ZL) which corresponds to less than 15%, preferably less than 10%, of an extension (L) of the gear wheel cutter (20, 20') from a main bearing (25) to a counter-bearing (26).

13. Use of a gear milling cutter (20, 20) according to one of claims 1 to 12 for manufacturing a double helical gear (10) in a milling device, **characterized in that**, the gear (10) remains clamped in the milling device during manufacturing, and wherein the gear cutter (20) mills out the first gear rim (11) with the first hob cutter (21), is then moved in a radial direction away from the gear wheel (1), and the second gear rim (12) is then milled with the second hob cutter (22).

14. Method of manufacturing a gear (10) having a double helical gearing comprising the steps of:

> a. providing a gear milling cutter (20) having on a milling shaft (23) a first hob (21, 21) for milling out a first gear rim (12) of the double helical gearing and a second hob (22, 22) for milling out a second gear rim (12) of the double helical gearing, the gear hobs (21, 21, 22, 22) having studs (24) arranged in a helical shape around the milling shaft (23), wherein the helix form of the first hob (21, 21) is configured in the opposite direction to the helix form of the second hob (22, 22),
>
> b. providing a blank (30) that can be rotated about an axis of rotation (ZA) and has a first cylindrical surface (31) and a second cylindrical surface (32) for forming the subsequent gear rims (11), as well as a helix gap (13) between the cylindrical surfaces (31, 32),
>
> c. arranging the milling shaft (23), which is rotatable about an axis (WA), relative to a radial plane (ZE) which is orthogonal to the axis of rotation (ZA) of the blank of the gear wheel (10), with a setting angle (C) between the radial plane (ZE) and the axis (WA) of less than 20°,
>
> d. rotating the milling shaft (23) and engaging the first hob (21, 21) with the first surface (31) and cutting the first gear rim (11),
>
> e. positioning the milling shaft (23) relative to the radial plane (ZE) at a setting angle (C) of less than 20°,
>
> f. engaging the second hob (22, 22) with the second surface (32) and milling the second gear rim (12).

15. Method according to claim 14, **characterized in that**, after step d., an angular position of the gear wheel (10) on the axis of rotation (ZA) is stored in a control device and the milling shaft (23) is arranged relative to the gear wheel (10) in such a way that when the second hob cutter (22, 22) is engaged and the second gear rim (12) is milled, tooth flanks (29) are produced which are aligned corresponding to the tooth flanks (29) of the first gear rim (11).

16. Method according to claim 14, **characterized in that**, after step d. and after a final row of teeth has been completed and the first hob cutter (21, 21) has been disengaged from the first gear rim (11), an angular position of the gear wheel (10) is fixed in the axis of rotation (ZA) and the milling shaft (23) is arranged relative to the gear wheel (10) in such a way that when the second hob cutter (22, 22) is engaged and the second gear rim (12) is milled, gear flanks (29) are produced which are aligned corresponding to the gear flanks (29) of the first gear rim (11).

17. Method according to claim 14, **characterized in that**, a first feed direction (28), in which the milling shaft (23) is moved during milling on the first gear rim (11), extends from the outside to a helical gap (13) between the gear rims (11, 12), and a second feed direction (33), in which the milling shaft (23) is moved during milling on the second gear rim (12), extends from the outside to the helix gap (12).

**Revendications**

1. Fraise à roue dentée (20, 20') destinée à fraiser une roue dentée (10), dans laquelle la roue dentée (10) présente une première couronne de roue dentée (11) à denture oblique et une deuxième couronne de roue dentée (12) à denture oblique, dans laquelle la fraise à roue dentée (20, 20') présente sur un arbre de fraise (23) monté de manière à pouvoir tourner autour d'un axe (WA) une première fraise-mère (21, 21') destinée à fraiser la première couronne de roue dentée (11) et une deuxième fraise-mère (22, 22') destinée à fraiser la deuxième couronne de roue dentée (12), **caractérisée en ce que** l'arbre de fraise (23) et la première fraise-mère (21, 21') et la deuxième fraise-mère (22, 22') sont réalisés d'un seul tenant et les diamètres extérieurs respectifs des fraises-mères (21, 21', 22, 22') sont identiques, dans laquelle les fraises-mères (21, 21', 22, 22') présentent des dents (24) disposées autour de l'arbre de fraise (23) en une forme hélicoïdale, dans lequel la forme hélicoïdale de la première fraise-mère (21, 21') est configurée en sens inverse par rapport à la forme hélicoïdale de la deuxième fraise-mère (22, 22').

2. Fraise à roue dentée (20, 20') selon la revendication 1, **caractérisée en ce que** l'axe (WA) de l'arbre de fraise (23) présente par rapport à un plan radial (ZE), qui est orthogonal par rapport à un axe de rotation (ZA) de la couronne de roue dentée (11, 12), un angle de réglage (C) inférieur à 20° lorsqu'une des fraises-mères (21, 21', 22, 22') se trouve en prise avec la couronne de roue dentée (11, 12) respective.

3. Fraise à roue dentée (20) selon la revendication 1 ou 2, **caractérisée en ce qu'**un angle de pas (B) de la forme hélicoïdale se situe par rapport à un plan radial (WE), situé de manière orthogonale par rapport à l'axe (A), de l'arbre de fraise (23), dans la plage entre 4° et 8°, en particulier dans la plage entre 4 et 6,5°, de manière particulièrement préférée dans la plage entre 4,5 et 6°.

**4.** Fraise à roue dentée (20) selon la revendication 3, **caractérisée en ce que** les fraises-mères (21, 22') présentent respectivement une entrée, avec lesquelles des dents (24) disposées sur les fraises parviennent en prise avec la couronne de roue dentée (11, 12).

**5.** Fraise à roue dentée (20) selon la revendication 1 ou 2, **caractérisée en ce qu'**un angle de pas (B) de la forme hélicoïdale par rapport à un plan radial (WE), situé de manière orthogonale à l'axe (A), de l'arbre de fraise (23), se situe dans la plage entre 15° et 20°, en particulier dans la plage entre 16° et 18°.

**6.** Fraise à roue dentée (20) selon la revendication 5, **caractérisée en ce que** les fraises-mères (21, 22) présentent respectivement trois entrées, avec lesquelles des dents (24) disposées sur les fraises-mères (21, 21', 22, 22') parviennent en prise avec la couronne de roue dentée (11, 12).

**7.** Fraise à roue dentée (20, 20') selon l'une quelconque des revendications 1 à 6, **caractérisée en ce qu'**un angle d'inclinaison (A) d'une denture oblique des couronnes de roue dentée (21, 22) se situe dans la plage entre 10° et 40°, en particulier entre 10° et 35°, de manière particulièrement préférée sous la forme d'un angle entier, pouvant être divisé par 5 exprimé en degrés de 15° y compris à 30° y compris.

**8.** Fraise à roue dentée (20, 20') selon l'une quelconque des revendications 1 à 7, **caractérisée en ce que** l'arbre de fraise (23) est monté de manière à pouvoir tourner deux fois autour de l'axe (A), à savoir sur un palier principal (25), sur lequel un entraînement de l'arbre de fraise (23) a lieu également, ainsi que sur un contre-palier (26) de telle sorte que l'arbre de fraise (23) est soutenu deux fois dans la direction radiale (WR).

**9.** Fraise à roue dentée (20) selon l'une quelconque des revendications 1 à 8, **caractérisée en ce que** les fraises-mères (21, 21', 22, 22') s'étendent de manière axiale respectivement sur une longueur de taillage en développante (WL), qui correspond à 16 % à 30 %, en particulier à 20 % à 26 %, de manière particulièrement préférée à 22 % à 24 % d'une extension (L) de la fraise à roue dentée (20, 20') depuis un palier principal (25) à un contre-palier (26).

**10.** Fraise à roue dentée (20) selon l'une quelconque des revendications 1 à 9, **caractérisée en ce que** les fraises-mères (21, 21', 22, 22') présentent un diamètre (DW), qui correspond à 12 % à 26 %, en particulier à 16 % à 22 %, de manière particulièrement préférée à 18 % à 20 % d'une extension (L) de la fraise à roue dentée (20) depuis un palier principal (25) à un contre-palier (26).

**11.** Fraise à roue dentée (20, 20') selon l'une quelconque des revendications 1 à 10, **caractérisée en ce qu'**est prévu sur l'arbre de fraise (23) un espace intermédiaire (27) entre les fraises-mères (21, 21', 22, 22'), qui présente une longueur d'espace intermédiaire (ZL), qui correspond à 9 % à 23 %, en particulier à 13 % à 19 %, de manière particulièrement préférée de 15 % à 17 % d'une extension (L) de la fraise à roue dentée (20, 20') depuis un palier principal (25) à un contre-palier (26).

**12.** Fraise à roue dentée (20, 20') selon l'une quelconque des revendications 1 à 10, **caractérisée en ce qu'**est prévu sur l'arbre de fraise (23) un espace intermédiaire (27) entre les fraises-mères (21, 21', 22, 22'), qui présente une longueur d'espace intermédiaire (ZM), qui correspond à moins de 15 %, de préférence à moins de 10 % d'une extension (M) de la fraise à roue dentée (20, 20') depuis un palier principal (25) à un contre-palier (26).

**13.** Utilisation d'une fraise à roue dentée (20, 20') selon l'une quelconque des revendications 1 à 12 pour produire une roue dentée (10) à double denture oblique, **caractérisée en ce que** la roue dentée (10) reste enserrée dans le dispositif de fraisage pendant la production, et dans laquelle la fraise à roue dentée (20) fraise la première couronne de roue dentée (11) avec la première fraise-mère (21), puis est déplacée de manière à s'éloigner de la roue dentée (1) dans la direction radiale, puis la deuxième couronne de roue dentée (12) est fraisée avec la deuxième fraise-mère (22).

**14.** Procédé de fabrication d'une roue dentée (10) avec une double denture oblique, avec les étapes :

a. de fourniture d'une fraise à roue dentée (20), qui présente sur un arbre de fraise (23) une première fraise-mère (21, 21') destinée à fraiser une première couronne de roue dentée (12) de la double denture de fraise et une deuxième fraise-mère (22, 22') destinée à fraiser une deuxième couronne de roue dentée (12) de la double denture oblique, dans lequel les fraises-mères (21, 21', 22, 22') présentent des dents (24) disposées autour de l'arbre de fraise (23) sous une forme hélicoïdale, dans lequel la forme hélicoïdale de la première fraise-mère (21, 21') est configurée en sens inverse par rapport à la forme hélicoïdale de la deuxième fraise-mère (22, 22'),

b. de fourniture d'une ébauche (30) pouvant être tournée autour d'un axe de rotation (ZA), qui présente une première surface cylindrique (31) et une deuxième surface cylindrique (32) pour réaliser les couronnes de roue dentée (11) ultérieures, ainsi qu'un vide hélicoïdal (13) entre les surfaces cylindriques (31, 32),

c. d'agencement de l'arbre de fraise (23) pouvant tourner autour d'un axe (WA) par rapport à un plan radial (ZE), qui est orthogonal à l'axe de rotation (ZA) de l'ébauche de la roue dentée (10), à un angle de réglage (C) entre le plan radial (ZE) et l'axe (WA) inférieur à 20°,

d. de rotation de l'arbre de fraise (23) et de mise en prise de la première fraise-mère (21, 21') avec la première surface (31) et de fraisage de la première couronne de roue dentée (11),

e. d'agencement de l'arbre de fraise (23) par rapport au plan radial (ZE) à un angle de réglage (C) inférieur à 20° ;

f. de mise en prise de la deuxième fraise-mère (22, 22') avec la deuxième surface (32) et de fraisage de la deuxième couronne de roue dentée (12).

15. Procédé selon la revendication 14, **caractérisé en ce qu'**après l'étape d., une position angulaire de la roue dentée (10) dans l'axe de rotation (ZA) est mémorisée dans un dispositif de commande et l'arbre de fraise (23) est disposé par rapport à la roue dentée (10) de telle sorte que lors de la mise en prise de la deuxième fraise-mère (22, 22') et lors du fraisage de la deuxième couronne de roue dentée (12), des flancs de roue dentée (29) se forment, qui sont orientés de manière à correspondre aux flancs de dent (29) de la première couronne de roue dentée (11).

16. Procédé selon la revendication 14, **caractérisé en ce qu'**après l'étape d. et après une production d'une dernière rangée de dents et après une mise hors prise de la première fraise-mère (21, 21') avec la première couronne de roue dentée (11), une position angulaire de la roue dentée (10) est bloquée dans l'axe de rotation (ZA) et l'arbre de fraise (23) est disposé par rapport à la roue dentée (10) de telle sorte que lors de la mise en prise de la deuxième fraise-mère (22, 22') et lors du fraisage de la deuxième couronne de roue dentée (12), des flancs de roue dentée (29) se forment, qui sont orientés de manière à correspondre aux flancs de dent (29) de la première couronne de roue dentée (11).

17. Procédé selon la revendication 14, **caractérisé en ce qu'**une première direction d'avancement (28), dans laquelle l'arbre de fraisage (23) est déplacé lors du fraisage sur la première couronne de roue dentée (11), s'étend depuis l'extérieur vers un vide hélicoïdal (13) entre les couronnes de roue dentée (11, 12) et une deuxième direction d'avancement (33), dans laquelle l'arbre de fraise (23) est déplacé pendant le fraisage sur la deuxième couronne de roue dentée (12), s'étend depuis l'extérieur vers le vide hélicoïdal (12).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202019001722 U1
- WO 2009112003 A1
- US 1618429 A

- CN 106583855 A
- DE 102016214701 A1
- JP S53122993 A